# EUROPEAN PATENT APPLICATION

(11) **EP 3 893 122 A1**
(43) Date of publication of application: **13.10.2021**
(21) Application number: 18944965.5
(22) Date of filing: 24.12.2018
(51) Int. Cl.: G06F 15/16

(54) **NETWORK PROCESSOR AND MESSAGE PROCESSING METHOD**

(71) Applicant: Huawei Technologies Co., Ltd., Shenzhen Guangdong 518129 (CN)
(72) Inventor: XU, Hongbo, Shenzhen, Guangdong 518129 (CN)
(74) Representative: Isarpatent
(86) International application number: PCT/CN2018/123242
(87) International publication number: WO 2020/132838

(57) **Abstract**

Embodiments of this application relate to the computer field, and disclose a network processor, to resolve problems of how to reduce long duration of processing a packet by the network processor, reduce a volume of the network processor, and reduce power consumption and costs of the network processor. The network processor includes N processors, one instruction memory, and one instruction branch lookup engine, where each of the N processors is connected to both the instruction memory and the instruction branch lookup engine, and N is an integer greater than or equal to 2. The processor is configured to determine a query condition based on a forwarding processing operation for a packet. The instruction branch lookup engine is configured to obtain an associated data index based on the query condition, where the associated data index is used to indicate a storage address of a forwarding processing instruction corresponding to the forwarding processing operation. The processor is further configured to obtain the forwarding processing instruction from the instruction memory based on the associated data index. The processor is further configured to perform the forwarding processing operation on the packet according to the forwarding processing instruction. The embodiments of this application are used in a packet forwarding process.

## Description

### TECHNICAL FIELD

Embodiments of this application relate to the computer field, and in particular, to a network processor and a packet processing method.

### BACKGROUND

On the internet, a network device (for example, a switch or a router) may perform preprocessing and forwarding processing on a received packet, to transmit the packet from a source end to a destination end. Usually, a network processor (network processor, NP) included in the network device performs forwarding processing on a preprocessed packet. In the conventional technology, a network processor includes a plurality of processors, each processor is connected to an instruction memory (instruction memory), and each instruction memory stores all forwarding processing instructions related to forwarding processing. When performing a first forwarding processing operation on a preprocessed packet, any processor in the network processor needs to obtain a first forwarding processing instruction from all forwarding processing instructions stored in an instruction memory connected to the processor. The first forwarding processing instruction is a forwarding processing instruction related to the first forwarding processing operation. Then, the processor performs the first forwarding processing operation on the packet according to the first forwarding processing instruction. In this network processor structure, because duration of processing a packet by the network processor is relatively long, a delay of forwarding the packet is relatively large. In addition, because a volume of the network processor is relatively large, power consumption and costs of the network processor are relatively high. Therefore, problems that need to be urgently resolved are how to reduce the duration of processing a packet by the network processor, reduce the volume of the network processor, and reduce the power consumption and costs of the network processor.

### SUMMARY

Embodiments of this application provide a network processor and a packet processing method, to resolve problems of how to reduce duration of processing a packet by the network processor, reduce a volume of the network processor, and reduce power consumption and costs of the network processor.

To achieve the foregoing objective, the following technical solutions are used in the embodiments of this application.

According to a first aspect, an embodiment of this application provides a network processor. The network processor includes N processors, one instruction memory, and one instruction branch lookup engine, where each of the N processors is connected to both the instruction memory and the instruction branch lookup engine, and N is an integer greater than or equal to 2. The processor is configured to determine a query condition based on a forwarding processing operation for a packet. The instruction branch lookup engine is configured to obtain an associated data index based on the query condition, where the associated data index is used to indicate a storage address of a forwarding processing instruction corresponding to the forwarding processing operation. The processor is further configured to obtain the forwarding processing instruction from the instruction memory based on the associated data index. The processor is further configured to perform the forwarding processing operation on the packet according to the forwarding processing instruction. In this embodiment of this application, the network processor determines the storage address for storing the forwarding processing instruction, based on the query condition and a correspondence between the query condition, the associated data index, and the storage address of the forwarding processing instruction; and obtains the forwarding processing instruction required for processing the packet. This can effectively reduce duration of processing the packet by the network processor and a delay of forwarding the packet, and avoid a relatively large delay of forwarding the packet caused by searching for and obtaining the forwarding processing instruction in the instruction memory based on a start address of the forwarding processing instruction. In addition, quantities of instruction memories and instruction branch lookup engines that are included in the network processor are reduced. This reduces a volume of the network processor, and reduces power consumption and costs of the network processor.

With reference to the first aspect, in a possible implementation, the instruction memory includes N instruction cache storage modules and one instruction storage module, each of the N instruction cache storage modules is connected to one of the processors, and the N instruction cache storage modules are separately connected to the instruction storage module. Therefore, the instruction cache storage module is added to the instruction memory to store a forwarding processing instruction frequently used by the processor, so as to further reduce the duration of processing the packet by the network processor and the delay of forwarding the packet.

With reference to the foregoing possible implementation, in another possible implementation, the processor includes a controller. The controller is configured to determine the storage address of the forwarding processing instruction in the instruction cache storage module based on the associated data index. The controller is further configured to obtain the forwarding processing instruction from the instruction cache storage module based on the storage address of the forwarding processing instruction. Therefore, the forwarding processing instruction required for processing the packet is obtained based on the correspondence between the query condition, the associated data index, and the storage address of the forwarding processing instruction. This can effectively reduce the duration of processing the packet by the network processor and the delay of forwarding the packet, and avoid a relatively large delay of forwarding the packet caused by searching for and obtaining the forwarding processing instruction in the instruction memory module based on the start address of the forwarding processing instruction.

Storage space corresponding to the storage address of the forwarding processing instruction may be storage space corresponding to one cache instruction line in the instruction cache storage module. Alternatively, storage space corresponding to the storage address of the forwarding processing instruction may be storage space required for storing the forwarding processing instruction. Therefore, utilization of the storage space in the instruction cache storage module can be effectively improved.

With reference to the first aspect, in another possible implementation, the processor includes a controller. When the processor does not obtain the forwarding processing instruction from the instruction cache storage module based on the storage address of the forwarding processing instruction, the controller is configured to obtain the forwarding processing instruction from the instruction storage module based on the start address of the forwarding processing instruction, where the start address of the forwarding processing instruction is obtained by the processor from the instruction branch lookup engine based on the query condition; and the instruction cache storage module is further configured to store the forwarding processing instruction based on the storage address of the forwarding processing instruction, where the storage address of the forwarding processing instruction is an address that is in the instruction cache storage module and that corresponds to the associated data index.

According to a second aspect, an embodiment of this application provides a packet processing method, and the method may be applied to a network processor. The network processor includes N processors, one instruction memory, and one instruction branch lookup engine, where each of the N processors is connected to both the instruction memory and the instruction branch lookup engine, and N is an integer greater than or equal to 2. The method includes: The processor determines a query condition based on a forwarding processing operation for a packet; the instruction branch lookup engine obtains an associated data index based on the query condition, where the associated data index is used to indicate a storage address of a forwarding processing instruction corresponding to the forwarding processing operation; the processor obtains the forwarding processing instruction from the instruction memory based on the associated data index; and the processor performs the forwarding processing operation on the packet according to the forwarding processing instruction. In this embodiment of this application, the network processor determines the storage address for storing the forwarding processing instruction, based on the query condition and a correspondence between the query condition, the associated data index, and the storage address of the forwarding processing instruction; and obtains the forwarding processing instruction required for processing the packet. This can effectively reduce duration of processing the packet by the network processor and a delay of forwarding the packet, and avoid a relatively large delay of forwarding the packet caused by searching for and obtaining the forwarding processing instruction in the instruction memory based on a start address of the forwarding processing instruction. In addition, quantities of instruction memories and instruction branch lookup engines that are included in the network processor are reduced. This reduces a volume of the network processor, and reduces power consumption and costs of the network processor.

With reference to the second aspect, in a possible implementation, the instruction memory includes N instruction cache storage modules and one instruction storage module, each of the N instruction cache storage modules is connected to one of the processors, the N instruction cache storage modules are separately connected to the instruction storage module, and the processor includes a controller; and that the processor obtains the forwarding processing instruction from the instruction memory based on the associated data index includes: The controller determines the storage address of the forwarding processing instruction in the instruction cache storage module based on the associated data index; and the controller obtains the forwarding processing instruction from the instruction cache storage module based on the storage address of the forwarding processing instruction. Therefore, the instruction cache storage module is added to the instruction memory to store a forwarding processing instruction frequently used by the processor, so as to further reduce the duration of processing the packet by the network processor and the delay of forwarding the packet.

Storage space corresponding to the storage address of the forwarding processing instruction may be storage space corresponding to one cache instruction line in the instruction cache storage module. Alternatively, storage space corresponding to the storage address of the forwarding processing instruction may be storage space required for storing the forwarding processing instruction. Therefore, utilization of the storage space in the instruction cache storage module can be effectively improved.

With reference to the second aspect, in another possible implementation, the instruction memory includes N instruction cache storage modules and one instruction storage module, each of the N instruction cache storage modules is connected to one of the processors, the N instruction cache storage modules are separately connected to the instruction storage module, and the processor includes a controller; and when the processor does not obtain the forwarding processing instruction from the instruction cache storage module based on the storage address of the forwarding processing instruction, the method further includes: The controller obtains the forwarding processing instruction from the instruction storage module based on the start address of the forwarding processing instruction, where the start address of the forwarding processing instruction is obtained by the processor from the instruction branch lookup engine based on the query condition; and the instruction cache storage module stores the forwarding processing instruction based on the storage address of the forwarding processing instruction that is in the instruction cache storage module and that corresponds to the associated data index.

Optionally, the network processor provided in any one of the foregoing aspects may use an architecture mode of in which a plurality of processing units are in parallel (pipeline). Therefore, in the embodiments of this application, the network processor may use a plurality of processors to perform forwarding processing on a same packet, and each processor performs a different forwarding processing operation. Therefore, the processor, configured to process the packet, in the network processor may be at least one processor, to further reduce the duration of processing the packet by the network processor and the delay of forwarding the packet.

According to a third aspect, an embodiment of this application further provides a computer-readable storage medium, including computer software instructions. When the computer software instructions are run on a network processor, the network processor is enabled to perform the method in the second aspect.

According to a fourth aspect, an embodiment of this application further provides a computer program product including instructions. When the computer program product is run on a network processor, the network processor is enabled to perform the method in the second aspect.

According to a fifth aspect, an embodiment of this application provides a chip system. The chip system includes a processor and may further include a memory, and is configured to implement a function of the network processor in the foregoing method. The chip system may include a chip, or may include a chip and another discrete component.

In addition, for technical effects brought by design manners in any one of the foregoing aspects, refer to technical effects brought by different design manners in the first aspect and the second aspect. Details are not described herein again.

In the embodiments of this application, names of network processing devices constitute no limitation on the devices. In actual implementation, the devices may have other names. Provided that functions of the devices are similar to those in the embodiments of this application, the devices fall within the scope of the claims of this application and the equivalent technologies thereof.

### BRIEF DESCRIPTION OF DRAWINGS

FIG. 1 is an example composition diagram of a network processor according to the conventional technology;
FIG. 2 is an example composition diagram of a network processor according to an embodiment of this application;
FIG. 3 is an example composition diagram of another network processor according to an embodiment of this application;
FIG. 4 is an example diagram of a correspondence between a tag and an instruction line address according to an embodiment of this application;
FIG. 5 is an example diagram of a correspondence between a tag and storage space according to an embodiment of this application; and
FIG. 6 is a flowchart of a packet processing method according to an embodiment of this application.

### DESCRIPTION OF EMBODIMENTS

In the specification and claims of this application, terms such as "first", "second", and "third" are intended to distinguish between different objects but do not indicate a particular order.

In the embodiments of this application, a word such as "example" or "for example" is used to give an example, an illustration, or a description. Any embodiment or design scheme described as "example" or "for example" in the embodiments of this application should not be explained as being more preferred or having more advantages than another embodiment or design scheme. Exactly, use of the word such as "example" or "for example" is intended to present a related concept in a specific manner.

For clear and brief description of the following embodiments, a related technology is briefly described first.

According to a definition of the international network processors conference (network processors conference), a network processor is a programmable device, and is configured to perform various specific tasks in the communications field, for example, packet processing, protocol analysis, route search, voice/data aggregation, firewall, and quality of service (Quality of Service, QoS).

In the conventional technology, to ensure a hit rate of obtaining a forwarding processing instruction by a network processor, all forwarding processing instructions related to a forwarding processing operation are stored in a plurality of independent instruction memories associated with the network processor. Each instruction memory stores a same forwarding processing instruction. Each processor is connected to one instruction memory. It may be understood that one processor may be connected to one instruction memory, or two processors may be connected to a same instruction memory. An Intel Atom ATOM processor is used as an example. Each two Intel Atom ATOM processors may be connected to a same instruction memory, and each two Intel Atom ATOM processors use all forwarding processing instructions that are stored in the same instruction memory and that are related to forwarding processing.

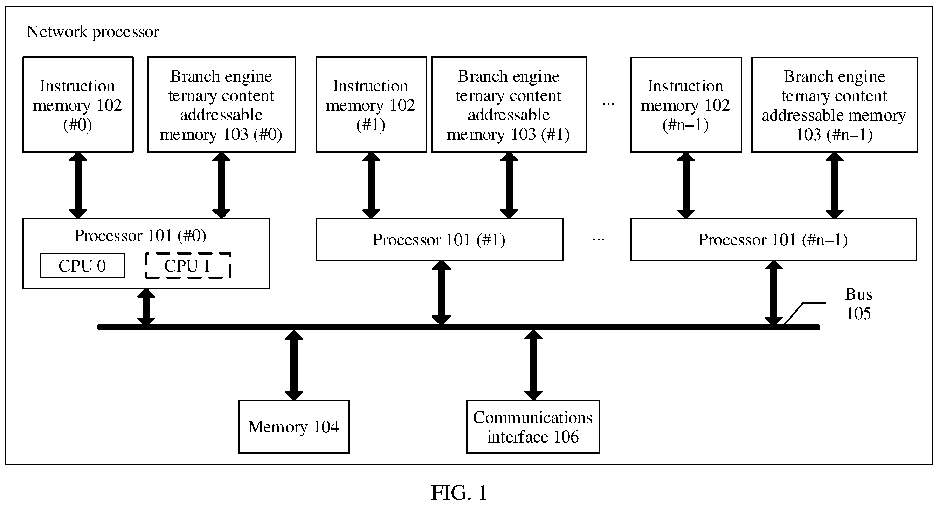

For example, FIG. 1 is an example composition diagram of a network processor according to the conventional technology. As shown in FIG. 1, the network processor includes N processors 101, N instruction memories 102, and N instruction branch lookup engines 103. Each processor 101 is connected to one instruction memory 102 and one instruction branch lookup engine 103. Each instruction memory 102 stores all forwarding processing instructions related to forwarding processing. N is an integer greater than or equal to 2.

The processor 101 is a control center of the network processor, and may be a processor, or may be a collective name of a plurality of processing elements. For example, the processor 101 is a central processing unit (Central Processing Unit, CPU), or may be an application-specific integrated circuit (Application Specific Integrated Circuit, ASIC), or one or more integrated circuits configured to implement the embodiments of this application, for example, one or more microprocessors (Digital Signal Processor, DSP) or one or more field programmable gate arrays (Field Programmable Gate Array, FPGA).

The processor 101 may execute various functions of the network processor by running or executing a software program stored in a memory 104 and invoking a forwarding processing instruction stored in the instruction memory 102.

In specific implementation, in an embodiment, the processor 101 may include one or more CPUs, for example, a CPU 0 and a CPU 1 shown in FIG. 1.

In specific implementation, each of the processors may be a single-core processor (single-CPU) or a multi-core processor (multi-CPU). The processor herein may be one or more devices, circuits, and/or processing cores configured to process data (for example, a computer program instruction).

The instruction memory 102 may be a read-only memory (Read-Only Memory, ROM) or another type of static storage device that may store static information and instructions. The memory 104 may be another memory that is included in the network processor and that is different from the instruction memory 102. For example, the memory 104 may be a cache, a random access memory (Random Access Memory, RAM), or another type of dynamic storage device that may store information and instructions. It is clear that the foregoing memory may alternatively be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, the memory is not limited thereto.

The instruction memory 102 and the memory 104 may exist independently, and be connected to the processor 101 through a communications bus 105. The instruction memory 102 and the memory 104 may alternatively be integrated with the processor 101. The communications bus 105 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, or the like. For ease of representation, only one thick line is used to represent the bus in FIG. 1, but this does not mean that there is only one bus or only one type of bus.

The instruction branch lookup engine (branch engine ternary content addressable memory, BETCAM) 103 is configured to store a correspondence between a query condition and a start address of a forwarding processing instruction corresponding to the query condition. One query condition corresponds to one forward processing operation. A TCAM is a ternary content addressable memory, and is mainly configured to quickly search for an access control list (Access Control List, ACL), a routing entry, and the like. The instruction branch lookup engine 103 may also be connected to the processor 101 through the communications bus 105.

Optionally, the network processor may further include a communications interface 106, for example, an input/output interface, to communicate with another chip in a network device in which the network processor is located.

A structure of the network processor shown in FIG. 1 does not constitute a limitation on the network processor. During actual application, the network processor may include more or fewer components than those shown in the figure, or some components may be combined, or different component arrangements may be used. For example, an arithmetic logic unit (arithmetic and logic unit, ALU) is a combinational logic circuit that can implement a multi-group arithmetic operation and a multi-group logic operation.

In conclusion, each instruction memory and each instruction branch lookup engine are independent units, and each processor, and an instruction memory and a instruction branch lookup engine that are connected to the processor can independently process a packet. When forwarding a packet, the network processor may need to perform a plurality of forwarding processing operations on the packet. The plurality of forwarding processing operations are serially processed by one processor, and the processor needs to obtain a forwarding processing instruction from the instruction memory according to a start instruction of forwarding processing instructions. Therefore, duration of processing the packet by the network processor is relatively long, and a delay of forwarding the packet is large. In addition, because a volume of the network processor is relatively large, power consumption and costs of the network processor are relatively high. Therefore, problems that need to be urgently resolved are how to reduce the duration of processing a packet by the network processor, reduce the volume of the network processor, and reduce the power consumption and costs of the network processor.

To resolve the foregoing problems, an embodiment of this application provides a network processor. The network processor includes N processors, one instruction memory, and one instruction branch lookup engine, where each of the N processors is connected to both the instruction memory and the instruction branch lookup engine, and N is an integer greater than or equal to 2. The processor is configured to determine a query condition based on a forwarding processing operation for a packet. The instruction branch lookup engine is configured to obtain an associated data index based on the query condition. The processor is further configured to obtain a forwarding processing instruction from the instruction memory based on the associated data index. The processor is further configured to perform the forwarding processing operation on the packet according to the forwarding processing instruction. The associated data index is used to indicate a storage address of the forwarding processing instruction corresponding to the forwarding processing operation. In this embodiment of this application, the network processor determines the storage address for storing the forwarding processing instruction, based on the query condition and a correspondence between the query condition, the associated data index, and the storage address of the forwarding processing instruction, and obtains the forwarding processing instruction required for processing the packet. This can effectively reduce duration of processing the packet by the network processor and a delay of forwarding the packet, and avoid a relatively large delay of forwarding the packet caused by searching for and obtaining the forwarding processing instruction in the instruction memory based on a start address of the forwarding processing instruction. In addition, quantities of instruction memories and instruction branch lookup engines that are included in the network processor are reduced. This reduces a volume of the network processor, and reduces power consumption and costs of the network processor.

It should be noted that, in this application, a packet processed by the network processor is a preprocessed packet. The preprocessing may include parsing a packet header of the packet, extracting information such as a packet type and a priority, and transmitting a preprocessed packet to the network processor. For convenience, packets described in the following are pre-processed packets. In addition, the forwarding processing operation in this embodiment of this application may be packet processing, protocol analysis, route search, voice/data aggregation, firewall, quality of service, or the like.

The following describes implementations of the embodiments of this application in detail with reference to the accompanying drawings.

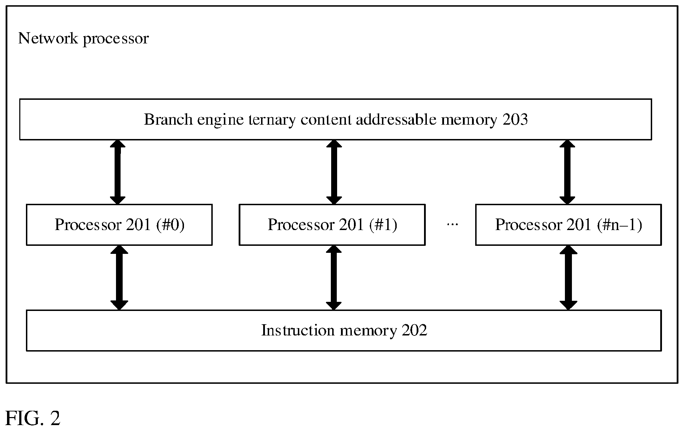

FIG. 2 is an example composition diagram of a network processor according to an embodiment of this application. As shown in FIG. 2, the network processor includes N processors 201, one instruction memory 202, and one instruction branch lookup engine 203. Each of the N processors 201 is connected to both the instruction memory 202 and the instruction branch lookup engine 203. N is an integer greater than or equal to 2. The N processors 201 may be numbered from 0 to n-1. Because quantities of instruction memories and instruction branch lookup engines that are included in the network processor are reduced, the N processors may share one instruction memory and one instruction branch lookup engine. This reduces a volume of the network processor, and reduces power consumption and costs of the network processor.

Usually, when performing forwarding processing on a packet, the network processor may perform a plurality of forwarding processing operations. In this embodiment of this application, the network processor may use an architecture mode in which a plurality of processing units are in parallel (pipeline), and a plurality of forwarding processing operations for one packet may be completed by a plurality of processors included in the network processor. For example, five forwarding processing operations for one packet may be completed by five processors included in the network processor, and one processor performs one forwarding processing operation on the packet. In this way, a delay of forwarding a packet can be effectively reduced. For an application scenario with medium or low traffic and for a chip having a requirement for low costs, the network processor provided in this embodiment of this application may be used.

It should be noted that, actions of obtaining forwarding processing instructions by all processors from the instruction memory are the same, and only the obtained forwarding processing instructions are different. The following describes specific functions of the processor, the instruction memory, and the instruction branch lookup engine by using a first forwarding processing operation as an example.

The processor 201 is configured to determine a first query condition based on the first forwarding processing operation for a packet. For example, before the network processor works, a correspondence between a forwarding processing operation and a query condition may be pre-stored in the memory of the processor. After obtaining the packet, the processor may determine, based on the first forwarding processing operation and the correspondence that is between a forwarding processing operation and a query condition and that is stored in the memory, the first query condition corresponding to the first forwarding processing operation. For example, the first forwarding processing operation is route search, and the first query condition is a query condition corresponding to the route search. After obtaining the first query condition, the processor may transmit the first query condition to the instruction branch lookup engine.

The instruction branch lookup engine 203 is configured to obtain a first associated data index based on the first query condition. The first associated data index is used to indicate a storage address of a first forwarding processing instruction corresponding to the first forwarding processing operation. In the following, the first forwarding processing instruction may be a forwarding processing instruction corresponding to the first forwarding processing operation. For example, before the network processor works, the instruction branch lookup engine may store a correspondence between a query condition and an associated data index. After obtaining the first query condition, the instruction branch lookup engine may obtain the first associated data index based on the first query condition and the correspondence between a query condition and an associated data index. After obtaining the first associated data index, the instruction branch lookup engine may transmit the first associated data index to the processor.

The processor 201 is further configured to obtain the first forwarding processing instruction from the instruction memory 202 based on the first associated data index.

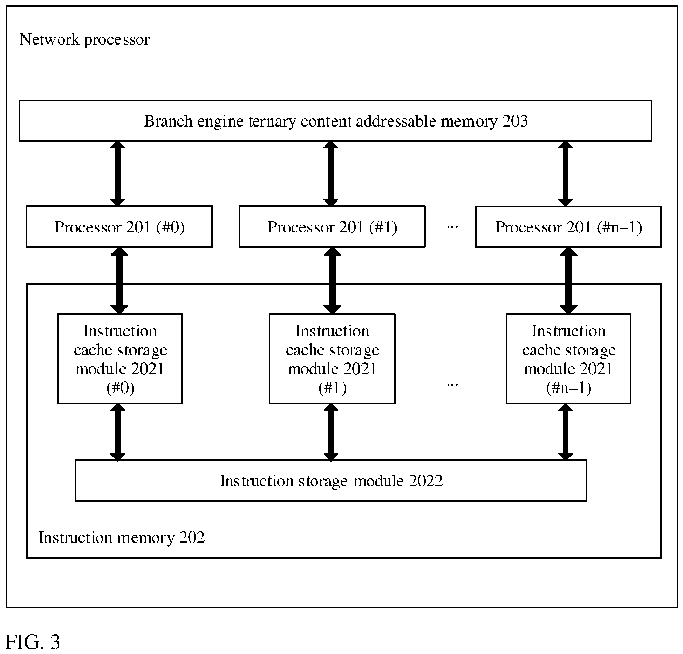

In a possible implementation, as shown in FIG. 3, the instruction memory 202 includes N instruction cache storage modules 2021 and one instruction storage module 2022. Each of the N instruction cache storage modules 2021 is connected to one processor 201 and the N instruction cache storage modules 2021 are separately connected to the instruction storage module 2022. The N instruction cache storage modules 2021 may be numbered from 0 to n-1. The instruction cache storage module may be a dynamic storage device, for example, a RAM. The instruction storage module may be a static storage device, for example, a ROM. The instruction cache storage module is configured to store a forwarding processing instruction frequently used for processing. The instruction storage module is configured to store all forwarding processing instructions related to forwarding processing.

Specifically, the processor may include a controller. The controller is configured to determine the storage address of the first forwarding processing instruction in the instruction cache storage module based on the first associated data index. The controller is further configured to obtain the first forwarding processing instruction from the instruction cache storage module based on the storage address of the first forwarding processing instruction.

For example, a tag table and a cache instruction storage table may be pre-stored. The tag table is used to store a tag (tag). The tag table may include X*Y tag storage units. One tag storage unit is used to store one tag (tag). The tag may be managed based on the associated data index. The cache instruction storage table is used to cache a forwarding processing instruction related to a forwarding processing operation. An association relationship may be established between the tag table and the cache instruction storage table by using a tag. Therefore, the tag may be determined based on the associated data index, and then the forwarding processing instruction related to the forwarding processing operation is obtained based on the tag. The tag is used to indicate a storage address of the forwarding processing instruction.

Solution 1: One tag may correspond to one instruction line address in the cache instruction storage table, and storage space corresponding to the instruction line address is used to store a forwarding processing instruction corresponding to one forwarding processing operation. If the cache instruction storage table includes Z instruction line addresses, and X * Y = Z, it indicates that a quantity of tags included in the tag table is the same as a quantity of instruction lines included in the cache instruction storage table, and the tags and the instruction line addresses are in a one-to-one correspondence.

It should be noted that a correspondence between an association data index and a tag, and a correspondence between a tag and an instruction line address may be preconfigured. Provided that the processor obtains the associated data index, the instruction line address may be determined based on the preconfigured correspondence between an association data index and a tag and the preconfigured correspondence between a tag and an instruction line address. For example, the processor may first determine a first tag based on the first association data index, determine a first instruction line address based on the first tag by using the correspondence between a tag and an instruction line address, and then obtain the first forwarding processing instruction from storage space corresponding to the first instruction line address.

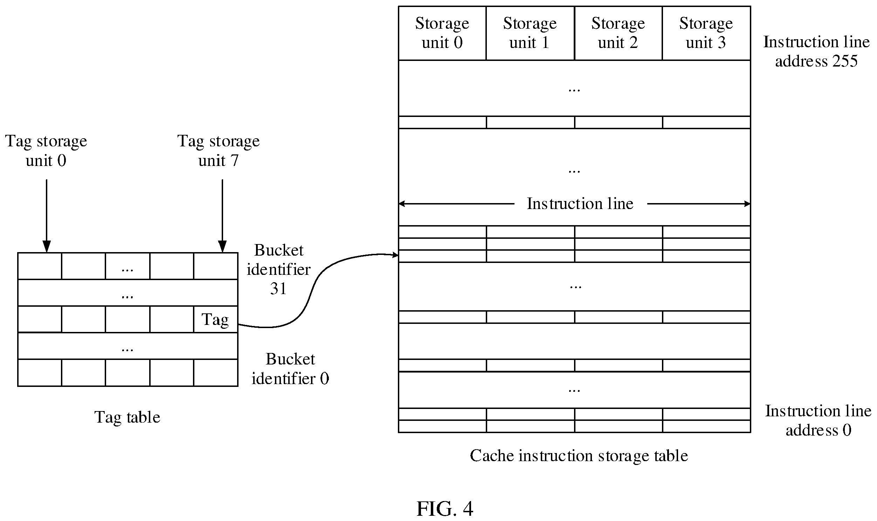

In addition, X rows included in the tag table may be understood as a depth of a bucket (bucket), and each depth may be represented by a bucket identifier (bucket_id). Y columns included in the tag table may be understood as a quantity of tag storage units (way or slot) that corresponds to each depth. For example, as shown in FIG. 4, it is assumed that a depth of a bucket may be 32, and bucket identifiers may be numbered from 0 to 31. A quantity of tag storage units that corresponds to each depth may be 8, and the storage units may be numbered from 0 to 7. A bucket identifier may be determined based on the 0^{th} to the 4^{th} bits of the associated data index, that is, bucket_id = ad_index[4:0]. A tag may be determined based on the 5^{th} to the 10^{th} bits of the associated data index, that is, tag = ad_index[10:5].

In this embodiment of this application, the network processor determines the storage address for storing the forwarding processing instruction, based on the query condition and a correspondence between the query condition, the associated data index, and the storage address of the forwarding processing instruction; and obtains the forwarding processing instruction required for processing the packet. This can effectively reduce duration of processing the packet by the network processor and a delay of forwarding the packet, and avoid a relatively large delay of forwarding the packet caused by searching for and obtaining the forwarding processing instruction in the instruction memory based on a start address of the forwarding processing instruction.

In Solution 1, the storage space corresponding to the storage address of the forwarding processing instruction may be storage space corresponding to one cache instruction line in the instruction cache storage module. However, each storage unit may store a few forwarding processing instructions, and the storage unit has a remaining capacity. The storage space corresponding to the storage address of the forwarding processing instruction may be storage space required for storing the first forwarding processing instruction, to improve utilization of the storage space. Each instruction line in the cache instruction storage table may be divided into at least two storage units, and each storage unit may store a same quantity of forwarding processing instructions. As shown in FIG. 4, one instruction line includes four storage units, one storage unit may store four forwarding processing instructions, and four storage units may store 16 forwarding processing instructions.

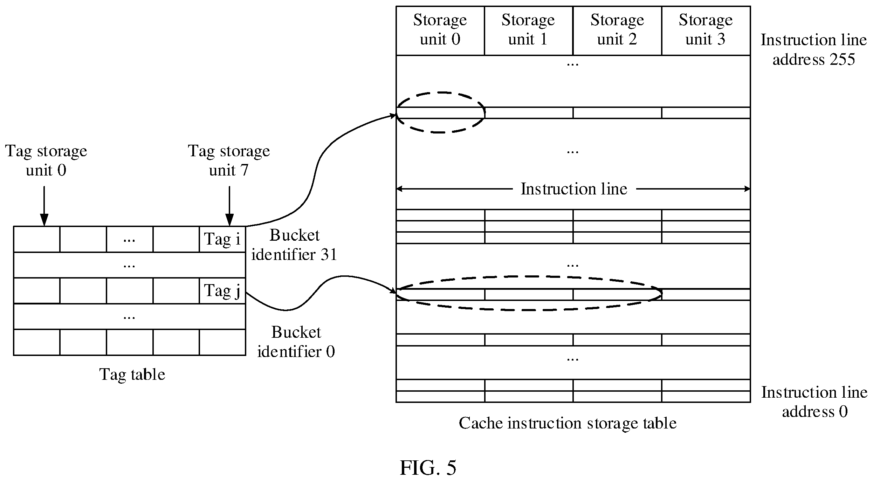

Solution 2: A tag may correspond to storage space required for storing a forwarding processing instruction in the cache instruction storage table, and the storage space required for the forwarding processing instruction may be a part of storage space of an instruction line or may be all storage space of an instruction line. The storage space is measured by a storage unit included in the instruction line. For example, as shown in FIG. 5, a tag i may correspond to the first storage unit in the instruction line, and a tag j may correspond to the first storage unit to the third storage unit in the instruction line. Another storage unit may correspond to another tag. A quantity of tags that may correspond to each instruction line is the same as a quantity of storage units included in the instruction line. Therefore, utilization of the storage space in the instruction cache storage module can be effectively improved.

Optionally, when the processor does not obtain the forwarding processing instruction from the instruction cache storage module based on the storage address of the forwarding processing instruction, the processor may obtain the forwarding processing instruction from the instruction storage module.

For example, the controller is configured to obtain, based on a start address of the first forwarding processing instruction, the first forwarding processing instruction from all the forwarding processing instructions that are stored in the instruction storage module and that are related to forwarding processing. The start address of the first forwarding processing instruction is obtained by the processor from the instruction branch lookup engine based on the first query condition.

The instruction cache storage module is further configured to store the first forwarding processing instruction based on the storage address of the first forwarding processing instruction. The storage address of the first forwarding processing instruction is an address that is in the instruction cache storage module and that is determined based on the first associated data index. Therefore, when the processor requires the first forwarding processing instruction again, the processor may directly obtain the first forwarding processing instruction from the instruction cache storage module. This reduces duration of processing a packet by the network processor and a delay of forwarding the packet.

The processor is further configured to perform the forwarding processing operation on the packet according to the forwarding processing instruction.

In this embodiment of this application, when performing forwarding processing on the packet, each of the N processors may first obtain the forwarding processing instruction from the instruction cache storage module. If the processor does not obtain the forwarding processing instruction from the instruction cache storage module, the processor then obtains the forwarding processing instruction from the instruction storage module. For details, refer to the foregoing description. Details are not described herein again in this embodiment of this application.

A structure of the network processor shown in FIG. 2 does not constitute a limitation on the network processor. During actual application, the network processor may include more or fewer components than those shown in the figure, or some components may be combined, or different component arrangements may be used. For example, an arithmetic logic unit (arithmetic and logic unit, ALU) is a combinational logic circuit that can implement a multi-group arithmetic operation and a multi-group logic operation.

The network processor usually includes several microcode processors and several hardware coprocessors. A plurality of microcode processors perform parallel processing in the network processor, and control a processing process by using pre-compiled microcode. For some complex standard operations (such as a memory operation, a routing table lookup algorithm, a QoS congestion control algorithm, and a traffic scheduling algorithm), the hardware coprocessor is used to further improve processing performance. This implements a combination of service flexibility and high performance.

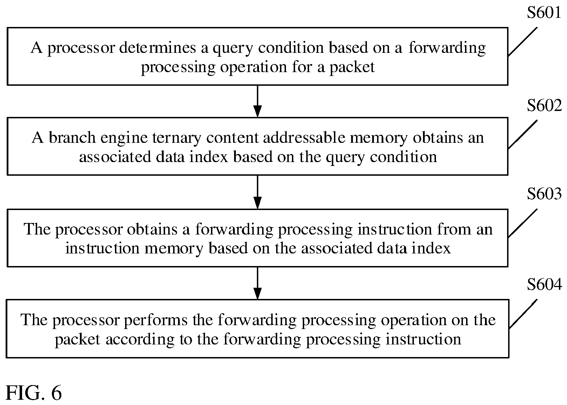

FIG. 6 is a flowchart of a packet processing method according to an embodiment of this application. The method may be applied to the network processor shown in FIG. 2. The method may include the following steps.
S601: A processor determines a query condition based on a forwarding processing operation for a packet.
S602: A instruction branch lookup engine obtains an associated data index based on the query condition.
S603: The processor obtains a forwarding processing instruction from an instruction memory based on the associated data index.

As shown in FIG. 3, the instruction memory includes N instruction cache storage modules and one instruction storage module, each of the N instruction cache storage modules is connected to one processor, and the N instruction cache storage modules are separately connected to the instruction storage module. The processor may include a controller, and that the processor obtains a forwarding processing instruction from an instruction memory based on the associated data index specifically includes: The controller determines a storage address of the forwarding processing instruction in the instruction cache storage module based on the associated data index. Then, the controller obtains the forwarding processing instruction from the instruction cache storage module based on the storage address of the forwarding processing instruction.

Storage space corresponding to the storage address of the forwarding processing instruction may be storage space corresponding to one cache instruction line in the instruction cache storage module. Alternatively, storage space corresponding to the storage address of the forwarding processing instruction may be storage space required for storing the forwarding processing instruction.

S604: The processor performs the forwarding processing operation on the packet according to the forwarding processing instruction.

When the processor does not obtain the forwarding processing instruction from the instruction cache storage module based on the storage address of the forwarding processing instruction, the method further includes: The controller obtains the forwarding processing instruction from the instruction storage module based on a start address of the forwarding processing instruction, where the start address of the forwarding processing instruction is obtained by the processor from the instruction branch lookup engine based on the query condition; and the instruction cache storage module stores the forwarding processing instruction based on the storage address of the forwarding processing instruction that is in the instruction cache storage module and that corresponds to the associated data index.

For details, refer to the description in the foregoing embodiments. Details are not described herein again in this embodiment of this application.

In this embodiment of this application, the network processor determines the storage address for storing the forwarding processing instruction, based on the query condition and a correspondence between the query condition, the associated data index, and the storage address of the forwarding processing instruction; and obtains the forwarding processing instruction required for processing the packet. This can effectively reduce duration of processing the packet by the network processor and a delay of forwarding the packet, and avoid a relatively large delay of forwarding the packet caused by searching for and obtaining the forwarding processing instruction in the instruction memory based on the start address of the forwarding processing instruction. In addition, quantities of instruction memories and instruction branch lookup engines that are included in the network processor are reduced. This reduces a volume of the network processor, and reduces power consumption and costs of the network processor.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A network processor, comprising N processors, one instruction memory, and one instruction branch lookup engine, wherein each of the N processors is connected to both the instruction memory and the instruction branch lookup engine, and N is an integer greater than or equal to 2, wherein
the processor is configured to determine a query condition based on a forwarding processing operation for a packet;
the instruction branch lookup engine is configured to obtain an associated data index based on the query condition, wherein the associated data index is used to indicate a storage address of a forwarding processing instruction corresponding to the forwarding processing operation;
the processor is further configured to obtain the forwarding processing instruction from the instruction memory based on the associated data index; and
the processor is further configured to perform the forwarding processing operation on the packet according to the forwarding processing instruction.

2. The network processor according to claim 1, wherein the instruction memory comprises N instruction cache storage modules and one instruction storage module, each of the N instruction cache storage modules is connected to one of the processors, and the N instruction cache storage modules are separately connected to the instruction storage module.

3. The network processor according to claim 2, wherein the processor comprises a controller, wherein
the controller is configured to determine the storage address of the forwarding processing instruction in the instruction cache storage module based on the associated data index; and
the controller is further configured to obtain the forwarding processing instruction from the instruction cache storage module based on the storage address of the forwarding processing instruction.

4. The network processor according to claim 3, wherein storage space corresponding to the storage address of the forwarding processing instruction is storage space corresponding to one cache instruction line in the instruction cache storage module.

5. The network processor according to claim 3, wherein storage space corresponding to the storage address of the forwarding processing instruction is storage space required for storing the forwarding processing instruction.

6. The network processor according to claim 2, wherein the processor comprises a controller, and when the processor does not obtain the forwarding processing instruction from the instruction cache storage module based on the storage address of the forwarding processing instruction,
the controller is configured to obtain the forwarding processing instruction from the instruction storage module based on a start address of the forwarding processing instruction, wherein the start address of the forwarding processing instruction is obtained by the processor from the instruction branch lookup engine based on the query condition; and
the instruction cache storage module is further configured to store the forwarding processing instruction based on the storage address of the forwarding processing instruction, wherein the storage address of the forwarding processing instruction is an address that is in the instruction cache storage module and that corresponds to the associated data index.

7. A packet processing method, applied to a network processor, wherein the network processor comprises N processors, one instruction memory, and one instruction branch lookup engine, each of the N processors is connected to both the instruction memory and the instruction branch lookup engine, and N is an integer greater than or equal to 2; and the method comprises:
determining, by the processor, a query condition based on a forwarding processing operation for a packet;
obtaining, by the instruction branch lookup engine, an associated data index based on the query condition, wherein the associated data index is used to indicate a storage address of a forwarding processing instruction corresponding to the forwarding processing operation;
obtaining, by the processor, the forwarding processing instruction from the instruction memory based on the associated data index; and
performing, by the processor, the forwarding processing operation on the packet according to the forwarding processing instruction.

8. The method according to claim 7, wherein the instruction memory comprises N instruction cache storage modules and one instruction storage module, each of the N instruction cache storage modules is connected to one of the processors, the N instruction cache storage modules are separately connected to the instruction storage module, and the processor comprises a controller; and the obtaining, by the processor, the forwarding processing instruction from the instruction memory based on the associated data index comprises:
determining, by the controller, the storage address of the forwarding processing instruction in the instruction cache storage module based on the associated data index; and
obtaining, by the controller, the forwarding processing instruction from the instruction cache storage module based on the storage address of the forwarding processing instruction.

9. The method according to claim 8, wherein storage space corresponding to the storage address of the forwarding processing instruction is storage space corresponding to one cache instruction line in the instruction cache storage module.

10. The method according to claim 8, wherein storage space corresponding to the storage address of the forwarding processing instruction is storage space required for storing the forwarding processing instruction.

11. The method according to claim 8, wherein the instruction memory comprises N instruction cache storage modules and one instruction storage module, each of the N instruction cache storage modules is connected to one of the processors, and the N instruction cache storage modules are separately connected to the instruction storage module; and the processor comprises a controller, and when the processor does not obtain the forwarding processing instruction from the instruction cache storage module based on the storage address of the forwarding processing instruction, the method further comprises:
obtaining, by the controller, the forwarding processing instruction from the instruction storage module based on a start address of the forwarding processing instruction, wherein the start address of the forwarding processing instruction is obtained by the processor from the instruction branch lookup engine based on the query condition; and
storing, by the instruction cache storage module, the forwarding processing instruction based on the storage address of the forwarding processing instruction that is in the instruction cache storage module and that corresponds to the associated data index.
